# EUROPÄISCHE PATENTANMELDUNG

(11) **EP 4 296 642 A1**
(43) Veröffentlichungstag der Anmeldung: **27.12.2023**
(21) Anmeldenummer: 22180089.9
(22) Anmeldetag: 21.06.2022
(51) Int. Cl.: G01L 5/24, F16B 31/02, G01L 1/26

(54) **REPRODUZIERBARE BEFESTIGUNG EINES SENSORSYSTEMS**

(71) Anmelder: Siemens Aktiengesellschaft, 80333 München (DE)
(72) Erfinder: Götz, Jürgen, 91315 Höchstadt/Aisch (DE); Horcher, Daniel, 96103 Hallstadt (DE); Labs, Torsten, 90478 Nürnberg (DE)
(74) Vertreter: Siemens Patent Attorneys

(57) **Zusammenfassung**

Die Erfindung betrifft eine Vorrichtung zur Befestigung eines Sensorsystems (6) an einer zu überwachenden Komponente (3), aufweisend:
- mindestens ein Anschlussmodul (2), ausgebildet eine Verbindung zwischen der zu überwachenden Komponente (3) und dem Sensorsystem (6) auszubilden,
- mindestens ein Anzugsmodul (1), ausgebildet ein Drehmoment aufzunehmen und
- mindestens ein Übertragungsmodul (5), aufweisend ein Widerstandselement,
wobei das Übertragungsmodul (5) ausgebildet ist, das Drehmoment von dem Anzugsmodul (1) auf das Anschlussmodul (2) zu übertragen, falls ein Bewegungswiderstand des Anschlussmoduls (2) kleiner oder gleich einer durch das Widerstandselement vorgegebenen Grenze ist, wodurch die Befestigung des Sensorsystems (6) an der zu überwachenden Komponente (3) erfolgt. Außerdem betrifft die Erfindung ein Sensorsystem (6) und eine Anlage.

## Beschreibung

### HINTERGRUND DER ERFINDUNG

### Gebiet der Erfindung

Die Erfindung betrifft eine Vorrichtung zur Befestigung eines Sensorsystems an einer zu überwachenden Komponente. Außerdem betrifft die Erfindung ein Sensorsystem und eine Anlage.

### Beschreibung des Stands der Technik

Intelligente Sensorsystem werden durch mechanische Vorkehrungen an einer zu überwachenden Komponente befestigt. Die Befestigung kann zwischen einem Gehäuse des intelligenten Sensorsystem und der zu überwachenden Komponente erfolgen. Zur Auswertung des Zustandes der zu überwachenden Komponente wird, insbesondere bei einer Vibrationsmessung, die Vibration bzw. verursachte Schwingungen im Zeit- und Frequenzbereich herangezogen.

Die Amplitude im Zeit- und Frequenzbereich der Schwingungen wird dabei durch die mechanische Ankopplung des intelligenten Sensorsystems an der zu überwachenden Komponenten beeinflusst. Denn ein Nachteil der Befestigung des Stands der Technik ist, dass Schwingungen am Gehäuse, welche zwar durch die zu überwachende Komponente erzeugt werden, aber nicht die eigentliche Vibration der zu überwachenden Komponente darstellen, durch einen Vibrationssensor ebenfalls erfasst werden. Dadurch sind die Messergebnisse sehr ungenau und unpräzise.

Zusätzlich variiert die Amplitude je nach mechanischer Ankopplung bzw. dem Anzugsdrehmoment und ist dementsprechend nicht reproduzierbar, wodurch Ergebnisse zwischen verschiedenen Systemen oder zwischen verschiedenen zu überwachenden Komponenten nicht vergleichbar sind.

Aus diesen Gründen ist die mechanische Kopplung zwischen dem intelligenten Sensorsystem und der zu überwachenden Komponente von höchster Bedeutung, um genaue und präzise Messergebnisse zu erzielen.

Im Stand der Technik erfolgt die Befestigung intelligenter Sensorsysteme typischerweise mittels Magneten, mittels eines Wachses oder mittels Schrauben.

Intelligenten Sensorsysteme, mit einem unteren, dreistelligen Verkaufspreis dienen heute zur reinen Datenerfassung, eine genaue und präzise Datenerfassung spielt nur eine untergeordnete Rolle. Es wird ein größerer Fehler toleriert.

Am Markt verfügbare Sensor-System-Lösungen werden zur Erfassung von Sensordaten eingesetzt und tolerieren eine höhere Messungenauigkeit. Eine exakte Befestigung wird nicht gefordert.

Sofern ein definiertes Anzugsdrehmoment angegeben ist, wie beispielsweise bei piezoelektrischen Sensoren, so werden hochpreisige, kalibrierte Drehmomentschlüssel eingesetzt. Diese Drehmomentschlüssel sind zusätzliche Hilfsmittel, wie sie beispielsweise in Kraftwerke verfügbar sind. Bei Anwendungen beispielsweise in Schaltanlagen oder bei medizinischen Patienten sind hochpreisige, kalibrierte Drehmomentschlüssel nur bedingt vorhanden.

Eine Anschaffung eines Drehmomentschlüssels, beispielsweise für Patienten ist sehr teuer.

Sofern eine genauere Messung und präzisere Messergebnisse notwendig sind, ist ein exaktes Anzugsdrehmoment der Befestigungsschrauben des Sensorsystems bzw. des Gehäuses des Sensorsystems an die zu überwachende Komponente erforderlich.

Hierfür können hochpreisige, kalibrierte Drehmomentschlüssel eingesetzt werden.

Die Aufgabe der Erfindung besteht darin, eine verbesserte Lösung zur Befestigung von Sensorsystemen an zu überwachenden Komponenten, welche reproduzierbare Messergebnisse ermöglicht, bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft eine Vorrichtung zur Befestigung eines Sensorsystems an einer zu überwachenden Komponente, aufweisend:
- mindestens ein Anschlussmodul, ausgebildet eine Verbindung zwischen der zu überwachenden Komponente und dem Sensorsystem auszubilden,
- mindestens ein Anzugsmodul, ausgebildet ein Drehmoment aufzunehmen und
- mindestens ein Übertragungsmodul, aufweisend mindestens ein Widerstandselement,
wobei das Übertragungsmodul ausgebildet ist, das Drehmoment von dem Anzugsmodul auf das Anschlussmodul zu übertragen, falls ein Bewegungswiderstand des Anschlussmoduls kleiner oder gleich einer durch das Widerstandselement vorgegebenen Grenze ist, wodurch die Befestigung des Sensorsystems an der zu überwachenden Komponente erfolgt.

Um die durch das Widerstandselement vorgegebenen Grenze zu modifizieren, können insbesondere mehrere Übertragungsmodul, jeweils mit einem oder mehreren Widerstandselementen eingesetzt werden.

Das Übertragungsmodul ist außerdem ausgebildet, das Drehmoment von dem Anzugsmodul auf das Anschlussmodul nicht zu übertragen, falls ein Bewegungswiderstand des Anschlussmoduls größer einer durch das Widerstandselement vorgegebenen Grenze ist.

Der Bewegungswiderstand des Anschlussmoduls ist der Widerstand, welcher durch das Anschlussmodul bei der Befestigung des Sensorsystems an der zu überwachenden Komponente vorliegt. Der Bewegungswiderstand ist insbesondere ein Widerstand durch eine Schraubverbindung.

Die durch das Widerstandselement vorgegebenen Grenze ist die Grenze, ab welcher das Widerstandselement nachgibt, insbesondere ein mechanischer Widerstand. Bei Erreichen der Grenze kann sich das Widerstandselement reversibel oder irreversibel verformen. Das Widerstandselement ist ausgebildet eine Kraft zwischen dem Anschlussmodul und dem Anzugsmodul auszubilden. Die Kraft kann direkt oder indirekt, das heißt über Zwischenkomponenten, ausgeübt werden.

Insbesondere ist das Übertragungsmodul ausgebildet, das Drehmoment von dem Anzugsmodul auf das Anschlussmodul zu übertragen, falls ein Widerstand des Widerstandselements nicht durch einen Bewegungswiderstand des Anschlussmoduls überschritten wird.

Das Übertragungsmodul ist außerdem ausgebildet, das Drehmoment von dem Anzugsmodul auf das Anschlussmodul nicht zu übertragen, falls ein Widerstand des Widerstandselements durch einen Bewegungswiderstand des Anschlussmoduls überschritten wird.

Außerdem ist das Übertragungsmodul insbesondere ausgebildet, das Drehmoment von dem Anzugsmodul auf das Anschlussmodul zu übertragen, falls der Bewegungswiderstand des Anschlussmoduls von dem Widerstand des Widerstandselements überwunden werden kann.

Außerdem ist das Übertragungsmodul insbesondere ausgebildet, das Drehmoment von dem Anzugsmodul auf das Anschlussmodul nicht zu übertragen, falls der Bewegungswiderstand des Anschlussmoduls von dem Widerstand des Widerstandselements nicht überwunden werden kann.

Ein Aspekt der Erfindung besteht darin, um präzise und reproduzierbare Messergebnisse zu erreichen, eine mechanische Vorrichtung für ein Sensorsystem anzugeben, welche das Drehmoment, insbesondere das Anzugsdrehmoment der Schrauben überwacht und nicht größer als die Grenze werden lässt. Hierdurch wird gewährleistet, dass die mechanische Verbindung zwischen dem Sensorsystem und der Komponente reproduzierbar ist und dadurch auch die Messergebnisse reproduzierbar sind.

Generell sein angemerkt, dass Einflussfaktoren, innerhalb der zu überwachenden Komponente, welche die Reproduzierbarkeit beeinflussen können, hier nicht berücksichtigt werden. Es geht hierbei rein um Einflüsse durch die mechanische Verbindung zwischen dem Sensorsystem und der zu überwachenden Komponente.

In einer Weiterbildung der Erfindung weist das Übertragungsmodul außerdem ein Eingriffselement und ein Rasterelement auf. Das Eingriffselement ist insbesondere ein Kopplungselement, um von dem Rasterelement formschlüssig aufgenommen zu werden. Das Rasterelement ist insbesondere ein Gegenstück zum Eingriffselement und damit ein Kopplungselement, um das Rasterelement formschlüssig aufzunehmen. Das Rasterelement ist insbesondere eine Vertiefung, eine Nut und/oder eine Mulde.

Alternativ zu dem Eingriffselement und zu dem Rasterelement kann die Übertragung des Drehmoments zwischen dem Anschlussmodul und dem Anschlussmodul durch eine alternative zerstörungsfreie oder irreversibel lösbare Verbindung erfolgen.

In einer weiteren Weiterbildung der Erfindung ist das Eingriffselement ausgebildet, das Drehmoment aufzunehmen. Das Drehmoment wird von dem Eingriffselement insbesondere in transformierter Weise aufgenommen, d.h. das aufgenommene Drehmoment hat insbesondere einen anderen Wert, welcher zu dem ursprünglichen Drehmoment am Anzugmodul proportional ist.

In einer weiteren Weiterbildung der Erfindung ist das Eingriffselement außerdem ausgebildet, das Drehmoment auf das Rasterelement zu übertragen, falls der Bewegungswiderstand des Anschlussmoduls unter der durch das Widerstandselement vorgegebenen Grenze liegt.

In einer weiteren Weiterbildung der Erfindung ist das Rasterelement ausgebildet, das Eingriffselement formschlüssig aufzunehmen, falls der Bewegungswiderstand des Anschlussmoduls unter der durch das Widerstandselement vorgegebenen Grenze liegt.

In einer weiteren Weiterbildung der Erfindung ist das Eingriffselement ausgebildet, das Drehmoment aufzunehmen, wobei das Rasterelement ausgebildet ist, das Drehmoment von dem Eingriffselement aufzunehmen, falls der Bewegungswiderstand des Anschlussmoduls unter der durch das Widerstandselement vorgegebenen Grenze liegt. Das Drehmoment wird von dem Eingriffselement insbesondere in transformierter Weise aufgenommen, d.h. das aufgenommene Drehmoment hat insbesondere einen anderen Wert, welcher zu dem ursprünglichen Drehmoment am Anzugmodul proportional ist.

In einer weiteren Weiterbildung der Erfindung ist das mindestens eine Anschlussmodul ausgebildet, die Verbindung zwischen der zu überwachenden Komponente und einem Gehäuse des Sensorsystems auszubilden, wobei das Sensorsystem in dem Gehäuse anordnebar ist. In dieser Variante erfolgt die Verbindung zwischen der zu überwachenden Komponente und dem Gehäuse des Sensorsystems. Alternativ kann die Verbindung direkt zwischen dem Sensorsystem und der zu überwachenden Komponente erfolgen.

In einer weiteren Weiterbildung der Erfindung ist das mindestens eine Anschlussmodul als:
- eine Steckverbindung und/oder
- eine Schraubverbindung, insbesondere eine horizontal bewegliche Schraubverbindung und/oder
- eine Schraubverbindung mit einem ersten Federelement ausgebildet. Das Anschlussmodul gibt jeweils einen Bewegungswiderstand vor. Eine Steckverbindung gibt insbesondere einen Bewegungswiderstand durch ein Ineinanderstecken vor. Eine Schraubverbindung gibt insbesondere einen Bewegungswiderstand durch ein Gewinde und eine Rotation in dem Gewinde vor.

In einer weiteren Weiterbildung der Erfindung weist das mindestens eine Anzugsmodul:
- einen Drehknopf, ausgebildet das Drehmoment aufzunehmen und zu übertragen und/oder
- ein Aufnahmeelement, ausgebildet das Widerstandselement aufzunehmen
auf. Der Drehknopf erleichtert ein Drehen durch einen Benutzer per Hand. Das Aufnahmeelement ermöglicht eine mechanische Verbindung zu dem Widerstandselement und eine Positionierung des Widerstandselement sicherzustellen.

In einer weiteren Weiterbildung der Erfindung ist der Drehknopf ausgebildet, das Drehmoment auf das Aufnahmeelement zu übertragen. Insbesondere ist der Drehknopf mit dem Aufnahmeelement mechanisch verbunden. Dies kann insbesondere durch eine Schraub- oder Klebeverbindung erfolgen.

In einer weiteren Weiterbildung der Erfindung ist das Eingriffselement ausgebildet als:
- eine Kugel und/oder
- ein Kegel und/oder
- ein Keil.

Für das Eingriffselement sind beliebige Formen möglich. Insbesondere ist es von Vorteil, wenn das Eingriffselement mit dem Rasterelement eine formschlüssige Verbindung eingeht. Das Rasterelement weist somit insbesondere eine Vertiefung als Gegenstück zum Eingriffselement aus. Das Eingriffselement ist ausgebildet in diese Vertiefung einzugreifen.

In einer weiteren Weiterbildung der Erfindung weist das Übertragungsmodul einen Kugelgewindestift auf. Der Kugelgewindestift weist insbesondere das Widerstandselement und das Eingriffselement auf. Zusätzlich weist der Kugelgewindestift insbesondere ein Außergewinde auf, mit welchem er im Aufnahmeelement befestigbar ist. Alternativ kann der Kugelgewindestift auf andere Weise, insbesondere Kleben, mit dem Aufnahmeelement verbunden werden. Der Kugelgewindestift ist auch als Druckgewindestift bezeichenbar.

In einer weiteren Weiterbildung der Erfindung ist das Widerstandselement ausgebildet als:
- ein elastisches Element und/oder
- ein zweites Federelement.

Das elastische Element und/oder das zweite Federelement haben den Vorteil, dass sie reversibel verformt werden können und die Vorrichtung dadurch wiederverwendbar ist.

Als irreversibel verformbares Widerstandselement ist eine Membran, welche bei Überschreiten der Grenze durchbrochen wird, einsetzbar.

In einer weiteren Weiterbildung der Erfindung weist das mindestens eine Übertragungsmodul außerdem auf:
- ein Zahnradpaar, ausgebildet das Drehmoment aufzunehmen und weiterzugeben, aufweisend:
   o ein erstes Zahnrad, insbesondere ein erstes Kegelzahnrad, aufweisend das Rasterelement und
   o ein zweites Zahnrad, insbesondere ein zweites Kegelzahnrad.

Das Zahnradpaar, insbesondere die Kegelzahnräder, sind von Vorteil, um das Drehmoment umzulenken, insbesondre um das Drehmoment um 90 Grad umzulenken. Auch ist das Zahnradpaar von Vorteil, um eine Transformation des Werts des Drehmoments, welches bei dem Anschlussmodul ankommt zu erreichen. Der Wert des Drehmoments, welches bei dem Anzugsmodul aufgenommen wird, kann sich somit von dem Wert des Drehmoments, welches bei dem Anschlussmodul aufgenommen wird, unterscheiden.

Die Erfindung umfasst außerdem ein Sensorsystem, aufweisend eine erfindungsgemäße Vorrichtung.

Die Erfindung umfasst außerdem eine Anlage aufweisend mindestens eine zu überwachende Komponente und mindestens ein erfindungsgemäßes Sensorsystem.

Zusammengefasst bietet die Erfindung den Vorteil, dass das Anzugsdrehmoment mittels der erfindungsgemäßen Vorrichtung definierbar ist, so dass genaue und präzise Messergebnisse erzielt werden können.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: eine schematische Darstellung einer erfindungsgemäßen Vorrichtung und
- Fig. 2: Diagramme von Messergebnissen unter Verwendung der erfindungsgemäßen Vorrichtung.

### DETAILLIERTE BESCHREIBUNG DER ERFINDUNG

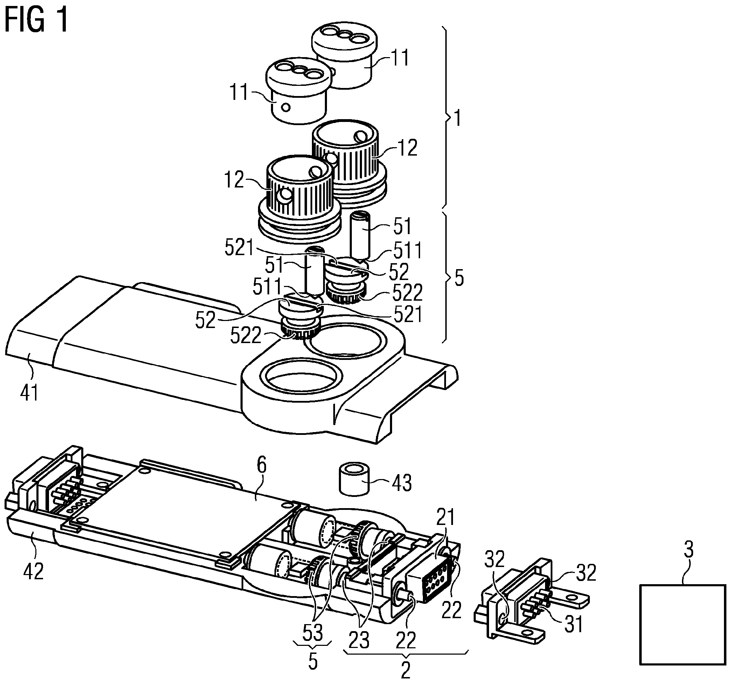

Fig. 1 zeigt die erfindungsgemäße Vorrichtung der mechanischen Vorkehrung zur Verbindung ist nach einer Ausführungsform wie folgt aufgebaut und deren Funktion nachfolgend beschrieben.

In der folgenden Ausführungsform ist eine RS232-Steckverbindung gezeigt, die integrierte, mechanische Vorkehrung zur Verbindung kann auch auf eine ähnliche Art und Weise für jede andere Steckverbindung oder Schraubverbindung realisiert werden.

Die Einzelteile der Vorrichtung sind aus Gründen der Anschaulichkeit getrennt und übereinander dargestellt. Im Einsatz sind die Einzelteile zusammengebaut angeordnet.

Zur mechanischen Orientierung und zur Befestigung des Sensorsystems 6 an der zu überwachenden Komponente 3 wird die RS232 Buchse 21 des Sensorsystems 6 in dem o.a. Beispiel in einen RS232-Stecker 31 der zu überwachenden Komponente 3 gesteckt. Die Befestigung erfolgt mittels zwei horizontal beweglich gelagerter Schrauben 22.

Der Abstandhalter 43 dient dazu einen Abstand zwischen dem unten dargestellten Gehäuseteil 42 und dem oben dargestellten Gehäuseteil 41 einzuhalten.

Diese Schrauben 22 sind horizontal beweglich gelagert, wodurch eine horizontale Bewegung durch die reine Verbindung mit dem RS232-Stecker 31 noch möglich ist, nur eine vertikale Bewegung und eine Rotation wird durch die Verbindung mit dem RS232-Stecker 31 eingeschränkt.

Beim Einstecken des Sensorsystems 6 in die RS232-Steckverbindung 21, 31 werden die Schrauben 22 in Richtung der hinteren Endposition (in Richtung der zu überwachenden Komponente 3, in der Abbildung nach rechts vorne) geschoben, so dass ein plane Steckverbindung 21, 31 zwischen dem Sensor-system 6 und der zu überwachenden Komponente 3 erreicht wird und dadurch keine Verkippung der RS232-Steckverbindung 21, 31 entsteht.

Die dazugehörige Feder (nicht dargestellt, innerhalb der Verkleidung 23 angeordnet) drückt die jeweilige Schraube 22 durch die Öffnung 32 des RS232-Steckers 32 und an das Gewinde der Gegenmutter, die sich in dem Gehäuse der zu überwachenden Komponente 3 befindet, so dass die Schraube 22 einen zentrierten Kontakt zum Gewinde der Gegenmutter hat.

In den Drehknöpfen 12 sind Aufnahmeelemente 11 für Kugelgewindestifte 51, auch als Druckgewindestifte 51 bezeichenbar, angeordnet. Die Drehknöpfen 12 sind mit den Aufnahmeelemente 11 insbesondere durch eine Schraubverbindung, welche am Umfang der Drehknöpfe 12 und der Aufnahmeelemente 11 angeordnet ist, verbunden, wodurch eine Rotation der Drehknöpfe 12 zu einer entsprechenden Rotation der Aufnahmeelemente 11 führt. Die Aufnahmeelemente 11 sind ausgebildet Kugelgewindestifte 51, auch als Druckgewindestift 51 bezeichenbar, aufzunehmen. In Fig. 1 sind die Löcher rechts vorne für die Kugelgewindestifte 51 vorgesehen.

Unter den Druckgewindestiften 51 sind obere erste Kegelzahnräder 52 angeordnet. Die oberen ersten Kegelzahnräder 52 weisen Zähne 522 und eine Nut 521 auf. Die Nut ist eine Ausführungsform des Rasterelements 521.

Die Druckgewindestifte 51 weisen eine Kugel 511, welche an der Kontaktstelle zur Nut 521 angeordnet ist und eine Feder, auf. Die Kugel 511 ist eine Ausführungsform eines Eingriffselements (511). Die Feder ist eine Ausführungsform eines Widerstandselements.

Kugel 511 und Feder sind im Inneren des jeweiligen Druckgewindestifts 51 angeordnet und die Feder ist in Fig. 1 nicht dargestellt.

Wird der Drehknopf 12 gedreht bzw. rotiert, so dreht bzw. rotiert sich mit ihm das darin angeordnete Aufnahmeelement 11 und diese wiederrum erzeigt eine Kreisbewegung des darin angeordneten Druckgewindestifts 51, welcher wiederrum das obere erste Kegelzahnrad 52 in Rotation versetzt.

Die oberen ersten Kegelzahnräder 52 greifen in untere zweiten Kegelzahnräder 53. Die unteren zweiten Kegelzahnräder 53 sind mit den horizontal beweglichen Schrauben 22 verbunden und eine Rotation der unteren zweiten Kegelzahnräder 53 führt zu einer Rotation der horizontal beweglichen Schrauben 22. Durch eine Rotation der unteren zweiten Kegelzahnräder 53 werden die horizontal beweglichen Schraube 22 rotiert, so werden die horizontal beweglichen Schrauben 22 in das Gewinde der Gegenmutter mit einem definierten Drehmoment angeschraubt.

Das Drehmoment wird mit den Kugelgewindestiften 51 durch Einstellung der Federkraft (durch eine Feder im Druckgewindestift 51) justiert.

Durch eine zunehmende Rotation des Anzugsmoduls 1, erfolgt ein zunehmend starker Anzug der Schrauben 22 des Anschlussmoduls 2. Dadurch steigt der Bewegungswiderstand des Anschlussmoduls 2.

Falls der Bewegungswiderstand des Anschlussmoduls 2 noch unter der durch das Widerstandselement 51 vorgegebenen Grenze liegt, erfolgt weiterhin eine Übertragung des Drehmoments von dem Anzugsmodul 1 auf das Anschlussmodul 2 durch das Übertragungsmodul 5.

Falls der Bewegungswiderstand des Anschlussmoduls 2 die durch das Widerstandselement 51 vorgegebenen Grenze überschreitet, erfolgt keine weitere Übertragung des Drehmoments von dem Anzugsmodul 1 auf das Anschlussmodul 2 durch das Übertragungsmodul 5. Es wurde die eingestellte Federkraft des Widerstandselements des Druckgewindestifts 51 erreicht, es drückt die Kugel 511 des Druckgewindestifts 51 nach oben, in die entgegengesetzte Richtung der Nut 521, die Feder wird zusammengedrückt und die Kugel 511 des Druckgewindestifts 51 rutscht dadurch aus der Nut 521. Das eingestellte Drehmoment wurde überschritten.

Dadurch findet keine Kraftübertragung zwischen den Drehknöpfen 12 und den oberen ersten Kegelzahnrädern 52 mehr statt und ein weiteres Drehen der Drehknöpfe 52 führt nicht dazu, dass die Schrauben 22 weiter festgezogen werden. Die Drehknöpfe 12 drehen durch. Somit wird ein zu starkes Anziehen vermieden und eine reproduzierbare Befestigung ermöglicht.

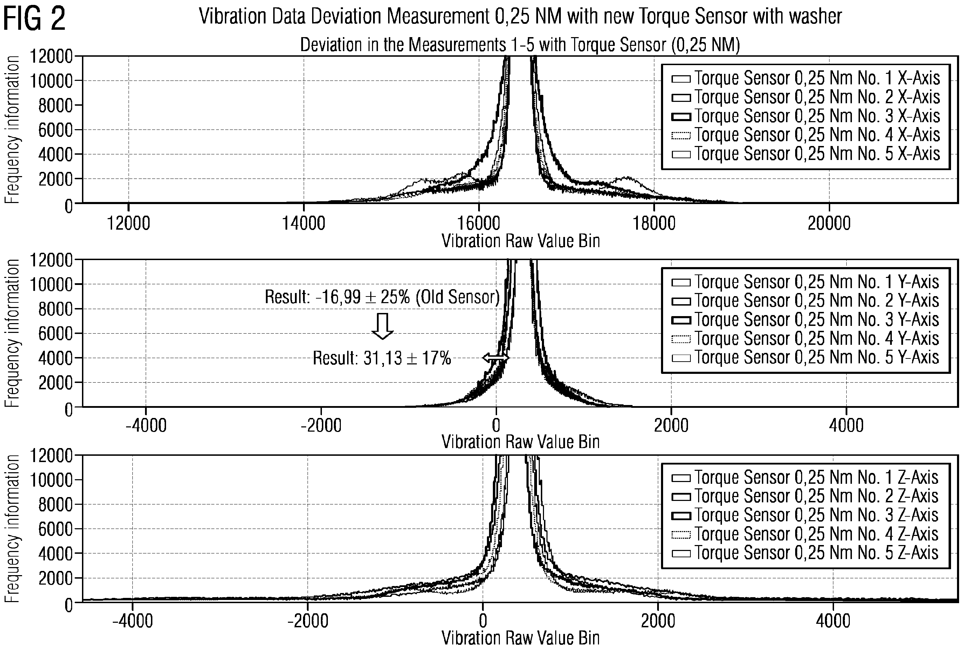

Fig. 2 zeigt wie am Beispiel von Messungen an einer Dialysemaschine der Nutzen der integrierten, mechanischen Vorkehrung überprüft wurde. Gemessen wurden Abweichungen in der Messung von Vibrationsdaten bei 0,25 Nm. Die horizontale Achse der Diagramme zeigt den Vibrationswert. Die vertikale Achse der Diagramme stellt die Frequenz der Vibration dar. In jedem Diagramm sind 5 Messreihen dargestellt.

Die Genauigkeit und die Präzision der Messungen ist mittels Histogrammen dargestellt. Es zeigt sich, dass die Messungenauigkeit des bisherigen Systems bei -16,99 digits (± 25%). Mit Hilfe der integrierten, mechanischen Vorkehrung konnte die Standardmessunsicherheit auf ± 17% reduziert werden.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Vorrichtung zur Befestigung eines Sensorsystems (6) an einer zu überwachenden Komponente (3),
aufweisend:
- mindestens ein Anschlussmodul (2), ausgebildet eine Verbindung zwischen der zu überwachenden Komponente (3) und dem Sensorsystem (6) auszubilden,
- mindestens ein Anzugsmodul (1), ausgebildet ein Drehmoment aufzunehmen und
- mindestens ein Übertragungsmodul (5), aufweisend ein Widerstandselement,
wobei das Übertragungsmodul (5) ausgebildet ist, das Drehmoment von dem Anzugsmodul (1) auf das Anschlussmodul (2) zu übertragen, falls ein Bewegungswiderstand des Anschlussmoduls (2) kleiner oder gleich einer durch das Widerstandselement vorgegebenen Grenze ist, wodurch die Befestigung des Sensorsystems (6) an der zu überwachenden Komponente (3) erfolgt.

2. Vorrichtung nach Anspruch 1,
wobei das Übertragungsmodul (5) außerdem aufweist:
- ein Eingriffselement (511) und
- ein Rasterelement (521).

3. Vorrichtung nach Anspruch 2,
wobei das Eingriffselement (511) ausgebildet ist, das Drehmoment aufzunehmen,
wobei das Eingriffselement (511) außerdem ausgebildet ist, das Drehmoment auf das Rasterelement (521) zu übertragen, falls der Bewegungswiderstand des Anschlussmoduls (2) unter der durch das Widerstandselement vorgegebenen Grenze liegt.

4. Vorrichtung nach Anspruch 2 oder 3,
wobei das Rasterelement (521) ausgebildet ist, das Eingriffselement (511) formschlüssig aufzunehmen, falls der Bewegungswiderstand des Anschlussmoduls (2) unter der durch das Widerstandselement vorgegebenen Grenze liegt.

5. Vorrichtung nach einem der Ansprüche 2 bis 4,
wobei das Eingriffselement (5) ausgebildet ist, das Drehmoment aufzunehmen,
wobei das Rasterelement (521) ausgebildet ist, das Drehmoment von dem Eingriffselement (511) aufzunehmen, falls der Bewegungswiderstand des Anschlussmoduls (2) unter der durch das Widerstandselement vorgegebenen Grenze liegt.

6. Vorrichtung nach einem der vorhergehenden Ansprüche,
wobei das mindestens eine Anschlussmodul (2) ausgebildet ist, die Verbindung zwischen der zu überwachenden Komponente (3) und einem Gehäuse (41, 42) des Sensorsystems (6) auszubilden, wobei das Sensorsystem (6) in dem Gehäuse (41, 42) anordnebar ist.

7. Vorrichtung nach einem der vorhergehenden Ansprüche, wobei das mindestens eine Anschlussmodul (2) ausgebildet ist als:
- eine Steckverbindung und/oder
- eine Schraubverbindung (22), insbesondere eine horizontal bewegliche Schraubverbindung (22) und/oder
- eine Schraubverbindung (22) mit einem ersten Federelement (23) .

8. Vorrichtung nach einem der Ansprüche 2 bis 7,
wobei das mindestens eine Anzugsmodul (1) aufweist:
- einen Drehknopf (12), ausgebildet das Drehmoment aufzunehmen und zu übertragen und/oder
- ein Aufnahmeelement (11), ausgebildet das Widerstandselement aufzunehmen.

9. Vorrichtung nach Anspruch 8,
wobei der Drehknopf (12) ausgebildet ist, das Drehmoment auf das Aufnahmeelement (11) zu übertragen.

10. Vorrichtung nach einem der Ansprüche 2 bis 9,
wobei das Eingriffselement (511) ausgebildet ist als:
- eine Kugel und/oder
- ein Kegel und/oder
- ein Keil.

11. Vorrichtung nach einem der Ansprüche 2 bis 10,
wobei das Übertragungsmodul (5) einen Kugelgewindestift (51) aufweist, welcher das Widerstandselement und das Eingriffselement (511) aufweist.

12. Vorrichtung nach einem der Ansprüche 2 bis 11,
wobei das Widerstandselement ausgebildet ist als:
- ein elastisches Element und/oder
- ein zweites Federelement.

13. Vorrichtung nach einem der Ansprüche 2 bis 12,
wobei das mindestens eine Übertragungsmodul (5) außerdem aufweist:
- ein Zahnradpaar (52, 53), ausgebildet das Drehmoment aufzunehmen und weiterzugeben, aufweisend:
o ein erstes Zahnrad (52), insbesondere ein erstes Kegelzahnrad (52), aufweisend das Rasterelement (521) und
o ein zweites Zahnrad (53), insbesondere ein zweites Kegelzahnrad (53).

14. Sensorsystem (6), aufweisend eine Vorrichtung nach einem der vorherigen Ansprüche.

15. Anlage aufweisend:
- mindestens eine zu überwachende Komponente (3) und
- mindestens ein Sensorsystem (6) nach Anspruch 14.
